# EUROPEAN PATENT APPLICATION

(11) **EP 2 996 361 A1**
(43) Date of publication of application: **16.03.2016**
(21) Application number: 15175554.3
(22) Date of filing: 06.07.2015
(51) Int. Cl.: H04W 4/02, H04W 4/08, H04W 4/20

(54) **METHOD AND SYSTEM FOR SECURE MESSAGING IN SOCIAL NETWORK**

(30) Priority: 10.09.2014 US 201462048377 P; 10.09.2014 US 201462048384 P; 12.11.2014 US 201462078715 P
(71) Applicant: YouMe.im ltd, 7565435 Richon Lezion (IL)
(72) Inventor: SAAR, Haim Moshe, 7523305 Rishon Lezion (IL); BEN DAVID, Ofer, 7580622 Rishon Lezion (IL)
(74) Representative: Balder IP Law, S.L.

(57) **Abstract**

The present invention provides a method for exchanging content items in computerized social network using data communication network, using mobile phones. The method comprising the steps of: creating new message with content object by a first user using a mobile phone, sending the message with the content object to at least one second user mobile phone, saving content object in specific location in the memory of the second user smartphone which is restricted for use only to a designated messaging application, creating data record of the content object including: unique ID of the object, identification of the first originator user and adding identification of the at least one second user into distribution list, saving said data record in graph database in a network server, receiving update of distribution of said object by a second user to at least one third user, updating distribution list in graph database with the at least third user identification and applying delete or share actions of objects at the mobile phones based on the distribution list of the users.

## Description

### TECHNICAL FIELD

The present invention relates secure message exchange in social network platform.

### SUMMARY OF INVENTION

The present invention provides a method for exchanging content items in computerized social network using data communication network, using mobile phones. The method comprising the steps of: creating new message with content object by a first user using a mobile phone, sending the message with the content object to at least one second user mobile phone, saving content object in specific location in the memory of the second user smartphone which is restricted for use only to a designated messaging application, creating data record of the content object including: unique ID of the object, identification of the first originator user and adding identification of the at least one second user into distribution list, saving said data record in graph database in a network server, receiving update of distribution of said object by a second user to at least one third user, updating distribution list in graph database with the at least third user identification and applying delete or share actions of objects at the mobile phones based on the distribution list of the users.

According to some embodiments of the present invention, the method further comprising the step of: receiving request to delete an object by the first user, query the graphical database for retrieving the distribution list of said content object, sending delete instruction to at least smartphone appearing at the distribution list and deleting at each mobile phone the respective object from memory.

According to some embodiments of the present invention the method further comprising the steps of: receiving indication from the respective mobile phone of deleting object and updating distribution list in the graph database based on received indications;

According to some embodiments of the present invention the first user define partial list of mobile phones from the distribution list according to defined criteria.

According to some embodiments of the present invention the method further comprising the step of the criteria includes at least one of: level of tree, time of distribution, geographic location of distribution, specific identification of users.

According to some embodiments of the present invention the method further comprising the step of: receiving request to share an object by the first user, query the graphical database for retrieving the distribution list of said content object, sending share instruction to at least mobile appearing at the distribution list and changing share status object at each respective mobile phone enabling the user to share the object.

According to some embodiments of the present invention the method further comprising the step of changing share icon graphic properties to indicate the object can be shared at each respective mobile phone;

According to some embodiments of the present invention the method further comprising the step of querying the graph database for each object to calculate number is users which received the respective object.

According to some embodiments of the present invention the method further comprising the step of querying the graph database to identify user which distributed the object, more than predefined threshold or more than other users.

According to some embodiments of the present invention the method further comprising the step of enabling each user which received the object to grade the object and calculating accumulated grade of at least one object for all users.

The present invention provides a system for exchanging content items in computerized social network using data communication network. The system comprised of: a personal computer communication device comprising a messaging application for creating new message with content object by a first user to a second user, sending the message with the content object to at least one second user, saving content object is specific location in the memory of the second user personal computer communication device, said memory which is restricted for use only to the messaging application, an API sever for creating data record of the content object including: unique ID of the object, identification of the first originator user, adding identification of the at least one second user into distribution list, saving said data record in graph database in a network server, receiving update of distribution of said object by a second user to at least one third user and updating distribution list in graph database with the at least third user identification and a network server sever for managing delete and share action per users request , based on the distribution lists of the objects.

The present invention discloses a method for exchanging content items in computerized social network using data network/ or cellular network. The method comprising the of: creating new message with original content item buy a first user using a mobile phone to a second user, encrypting the message, sending the encrypted message to the second user, opening the message by the second user view in encrypted mode and viewing decrypted message by providing code.

### BRIEF DESCRIPTION OF DRAWINGS

**Figure 1** is a block diagram of the system components and modules, according to some embodiments of the invention;
**Figures 2A,2B** are illustration of the mobile phone screen interface, according to some embodiments of the invention;
**Figure 3** is a flowchart illustrating the message app activities, according to some embodiments of the invention;
**Figure 3A** is a flowchart illustrating the message app activities, according to some embodiments of the invention;
**Figure 3B** is a flowchart illustrating the message app activities, according to some embodiments of the invention;
**Figure 4** is a flowchart illustrating the encryption Management module activities, according to some embodiments of the invention.
**Figure** 5 is a flowchart illustrating the object Management module activities, according to some embodiments of the invention.

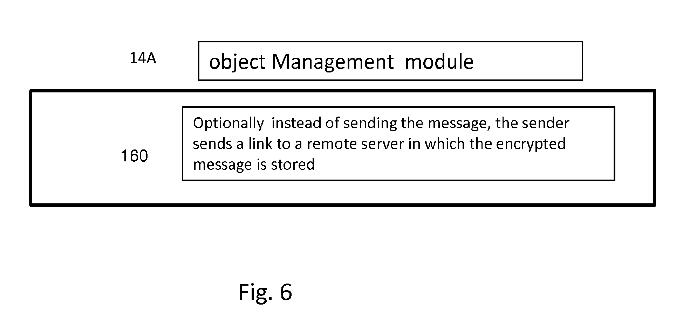

**Figure** 6 is a flowchart illustrating the object Management module activities,, according to some embodiments of the invention.
**Figure** 7 is a block diagram of the system components and modules, according to some embodiments of the invention;
**Figure** 8 a illustration of the mobile phone screen interface, according to some embodiments of the invention;
**Figure** 9 is a flowchart illustrating the call module activities, according to some embodiments of the invention;
**Figure** 10 is a flowchart illustrating the Automatic call module activities, according to some embodiments of the invention;
**Figure** 11 is a flowchart illustrating the call management module activities, according to some embodiments of the invention.
**Figure** 12 is a flowchart illustrating the message app activities, according to some embodiments of the invention
**Figure** 13 is a flowchart illustrating the object management module activities, according to some embodiments of the invention;
**Figure** 14 is a block diagram illustrating the object management module flow for sharing and deleting actions, according to some embodiments of the invention;
**Figure** 15 is a flowchart illustrating the object sharing module activities, according to some embodiments of the invention;
**Figure** 16A is a flowchart illustrating the object deleting module activities, according to some embodiments of the invention;
**Figure** 16B is a flowchart illustrating the object sharing module activities, according to some embodiments of the invention;
**Figure** 17 is an illustrating the deleting all objects along distribution list , according to some embodiments of the invention;
**Figure** 18 is an illustrating the deleting a single object along distribution list, according to some embodiments of the invention;
**Figure** 19 is an illustrating the deleting groups of object along distribution list, according to some embodiments of the invention;
**Figure** 20 is an illustrating the deleting object along distribution at the same tree level, according to some embodiments of the invention;
**Figures** 21 and 22 illustrates the distribution of messages in tree level structure , according to some embodiments of the invention;

### MODES FOR CARRYING OUT THE INVENTION

In the following detailed description of various embodiments, reference is made to the accompanying drawings that form a part thereof, and in which are shown by way of illustration specific embodiments in which the invention may be practiced. It is understood that other embodiments may be utilized and structural changes may be made without departing from the scope of the present invention.

The term "mobile device" as used herein in this application, is defined as a computerized mobile device having communication module , such as, smart phone , tablet or notebook.

The term "object" as used herein in this application, is defined as a any digital format or multimedia content, such as image, picture, video, graphic image , presentation, document etc.

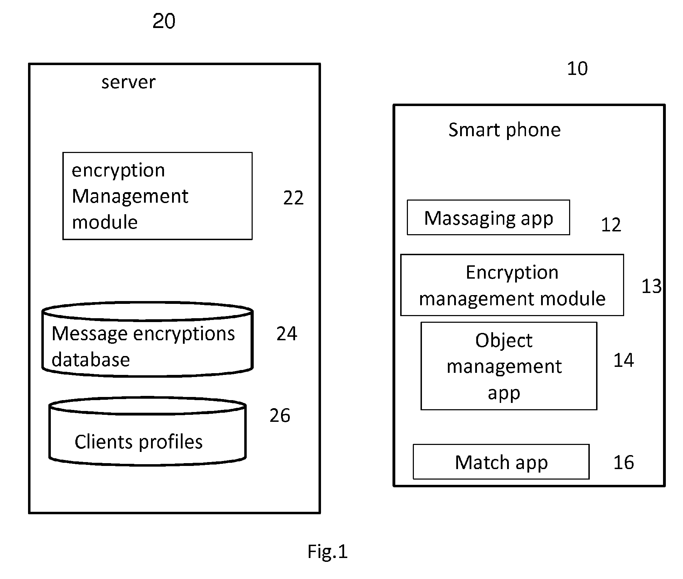

**Figure 1** is a block diagram of the system components and modules, according to some embodiments of the invention. The present invention system includes a smart phone 10 having massaging app 12 for supporting encrypted and concealed messaging. A server 20, comprising an encryption Management module 22 module for supporting the message application 12, encryption Management database 24, Clients profiles database 26.

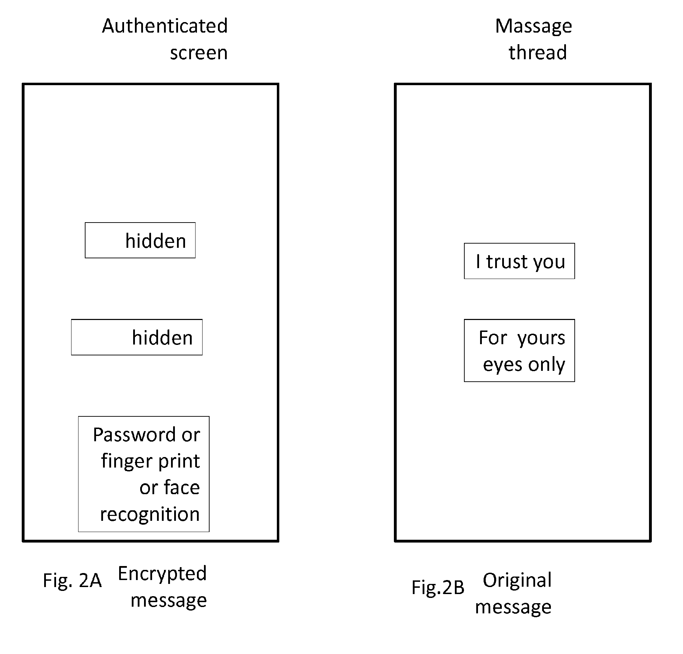

**Figure 2,2a** are illustrations of the mobile phone screen interface of the call application, according to some embodiments of the invention. **Fig. 2** illustrates the screen interface displaying an encrypted message, after typing the passwords or finger prints of face recognition, the decrypted/ original message is displayed (Fig. 2a)

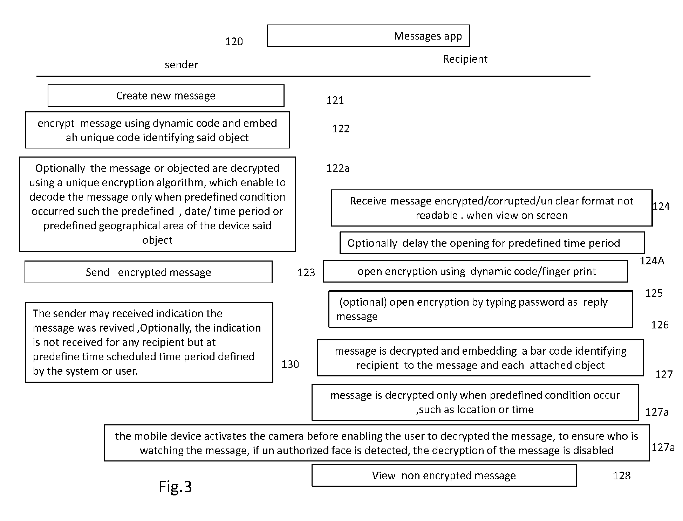

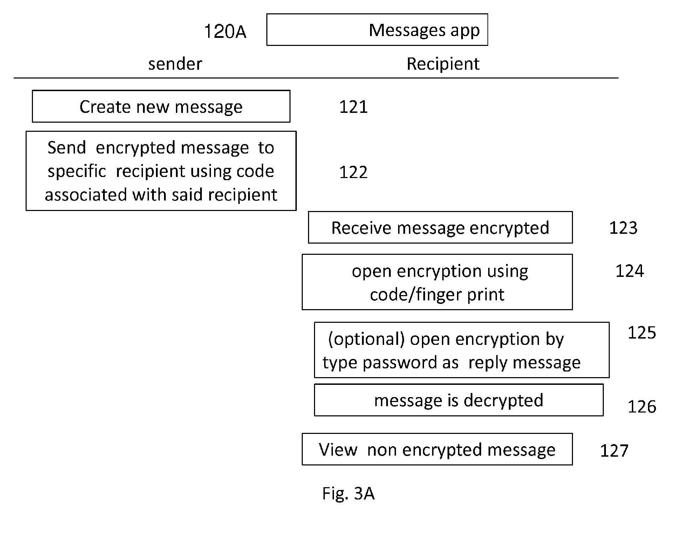

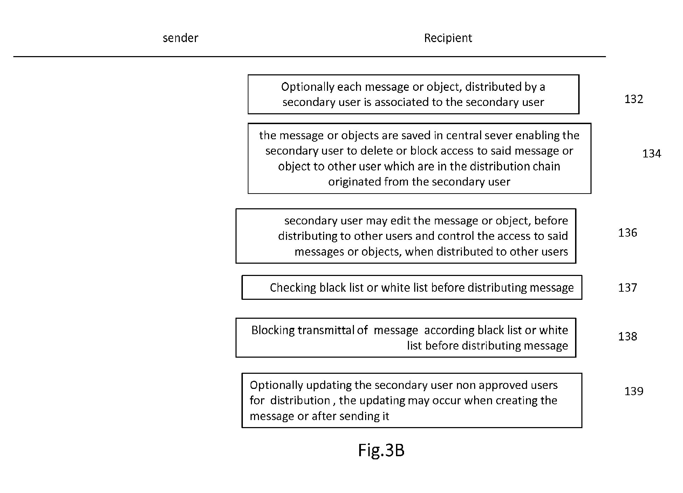

**Figure 3** is a flowchart illustrating the message app activities, according to some embodiments of the invention. The message app implements the following steps: enabling to create new message 121 optionally with attached content object such as image or video, encrypted message 122 and the attached content, sending encrypted message 123, receive encrypted message 124 and display message or object encrypted in an unclear format (blurry, dazed), such as user can't see the original message or attached object or display an alternative message content or object (such as popular image currently distributed in the network), open encryption using code/finger print 125, or optionally open encryption by typing password as reply message 126, once verifying the code or password , the message is decrypted 127, enabling to view non encrypted /real message 128. Each time when returning the message application, all messages are shown in encrypted mode or alternative message is displayed , just upon entering a code the decrypted/real message is shown. After predefined time the messaging app is not in use, the application is locked or closed , such as user is required to renter the password for viewing the messages.

According to another option of the present invention, the original creator of the message , may receive an indication in case the message was forwarded to another user. He may further receive an indication to the number of people the message, was forwarded.

The messaging application may include security modules preventing the user viewing the messages from making screen shots or capturing the image by external cameras. This prevention may be accomplished by unique properties of the of the image. The prevention of taking picture is accomplished by identifying an external camera by the internal camera of the mobile device.

Optionally, the prevention of taking screen shots is accomplished by implementing the application display as screen saver type, the screen saver format disable the option of taking screen shots. The messaging application may integrate incoming message from different messages platform, such as Facebook or Whatsup.

**Figure 3A** is a flowchart illustrating the message app activities, according to some embodiments of the invention. Create new message 121a optionally with attached content object such as image or video, send encrypted message and the attached content, encoded to specific code associate with recipient 122, Receive message encrypted 124 and display message encrypted or display an alternative message content or object (such as popular image currently distributed in the network, open encryption using code/finger print 125, optionally open encryption by typing password as reply message 126, one the code password is verified the message is decrypted 127 enabling to view non encrypted /real message 128. Each time when returning the message application, all messages are shown in encrypted mode or alternative message is displayed , just upon entering a code the decrypted/real message is shown. According to this scenario, in case the message is forwarded to another recipient, the message can't be decrypted , as it requires the specific code of the first recipient.

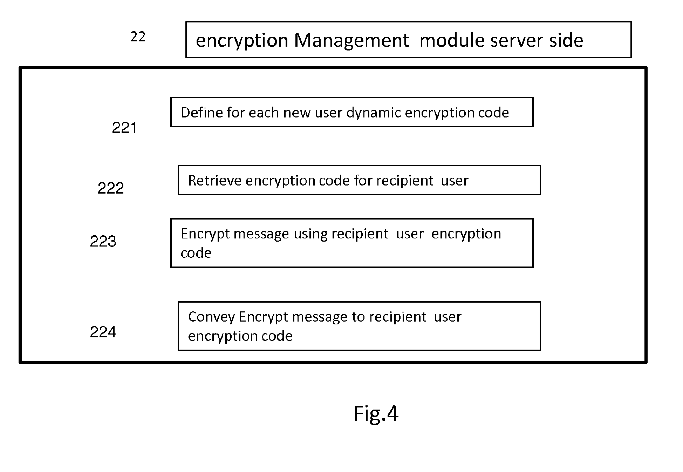

**Figure 4** is a flowchart illustrating the encryption Management module according to some embodiments of the invention. The encryption Management module implements the following steps: defining for each new user encryption code 221, retrieving encryption code for recipient user per request, Encrypt message using recipient user encryption code 223 and/or Convey Encrypt message to recipient user encryption code 224.

According to some embodiments of the present invention, when message appear on the on the main screen when it is first received, the encrypted messages will appear in is distorted or encrypted format, such the message is unreadable, appearing in different colors using design icons.

According to some embodiments of the present invention, the sender will receive notification once the message was opened by the recipient. Optionally, the indication is not received for any recipient but at predefine time scheduled time period defined by the system or user. (step 30 Fig. 3)

The message or attached object are encrypted to be displayed in an unclear format (blurry, dazed), such as user can't read or view the original message or attached object(step 124 Fig. 3). Each object such as image , movie or any other multimedia content attached to the message is blocked, such that the receiver, can't open, play or access the content, before decrypting the message. The decryption operation may be available only after predefined time period (e.g. 45 seconds) and/or after a session of messages ended (step 124a Fig. 3). Optionally the message is defined as personal to be view only by specific person, the mobile device activates the camera before enabling the user to decrypted the message, to ensure who is watching the message, if un authorized face is detected, the decryption of the message is disabled (127B Fig. 3).

According to another option, after the message is decrypted and opened, the camera is activated, incase another device with camera is detected, or a un authorized person face, the message is blocked for viewing in real-time.

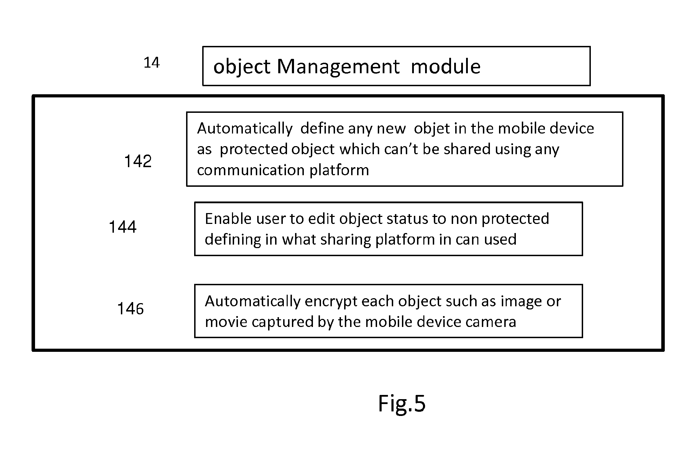

According to some embodiments of the present invention, any messages or objects such as image or movie, are decoded and saved in the mobile device or in server (see FIG5 A), preventing the user from sharing the object in any communication methods, such as email , SMS, chat message or social media network(step 142 Fig 5). Only the owner of the mobile device can change the object decryption to enable sharing the object using a defined communication method (step 144 Fig. 5).

According to some embodiments of the present invention any messages or objects are embedded with unique code identifying said object (step 122), to enable tracking the usage of each message or object, when distributed through any messaging platform.

According to some embodiments of the present invention any messages or objects are embedded with unique code (e.g. bar code) identifying said object and the each recipient of the message when he received the message(step 127 Fig. 3), such the message can be tracked , enabling to identify at each point of the message distribution by which person the message was forwarded to another person. Optionally each message or object, distributed by a secondary user is associated to the secondary user, and the message or objects are saved in central sever enabling the secondary user to delete or block access to said message or object to other user which are in the distribution chain originated from the secondary user. (step 132,134 Fig. 3b)

According to some embodiments of the present invention, a secondary user may edit the message or object, before distributing to other users and control the access to said messages or objects, when distributed to other users. (step 136 Fig. 3b)

According to some embodiments of the present invention, a secondary user is blocked from sending messages to some recipient , based on a black list or a white list predefined by the sender of the message (see Fig. 3B steps, 131, 137-139). The black list or white list can be embedded in the image code.

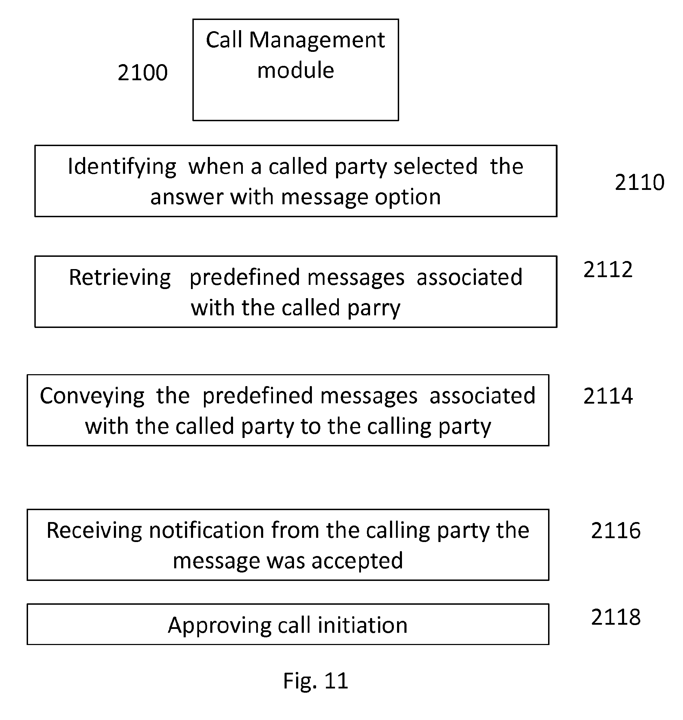

According to some embodiments of the present invention the message and the attached objects are saved in a central database server (see Fig. 11). Only the first user which created the message or object has an access permission to delete or edit the message or object. Once the first user deleted or edited the message, the message or objected are deleted or edited for all users which received it through the messaging platform of the present invention or any other messaging platform. The first user may access the saved message or object from the server using any device or computer, not just through the mobile device.

According to some embodiments of the present invention the message or objected are decrypted using a unique encryption algorithm (step 122a Fig.3), which enable to encode the message only when predefined condition occurred such the predefined , date/ time period or predefined geographical area of the device, in which the message is opened. The location can be identified by GPS, WIFI module or cellular network triangulation method. Before decrypting the message, are verified the predefined condition and the message is decrypted only if the condition occur. e.g. the device is located at pre-defined location(step 127 a).

According to some embodiments of the present invention , a user of the messaging application may determine/update a status (e.g. selecting colors) which define filtering scheme for incoming messages, the scheme may define if the user is alone or blocking messages from defined list of users. An indication of the scheme may appear in the contact list of all relevant users.

According to some embodiments of the present invention, the application messaging includes a camera functionality is associated with the hardware camera of the mobile device, such that each image or movie captured by the device using the messaging application, are decrypted or edited (embedding unique code) automatically by the methods or techniques, described by the present invention (step 146 (Fig. 5). The messaging application may include an icon of camera to enable taking pictures by the application.

According to some embodiments of the present invention, the message decryption may include transformation of the message or object to a three dimensional format.

According to some embodiments of the present invention, it is suggested that the message application may apply image processing or re-processing of the object content using a unique mathematical algorithm such that the object format(such as GIF) is unchanged, but the object can't be viewed (e.g. gray object), using any other application, than the designated application. In case a user un installed the messaging app and sent an object decrypted by the messaging app to another user which has the messaging app, and this user is trying to open the object, notification will be sent to creator of the object.

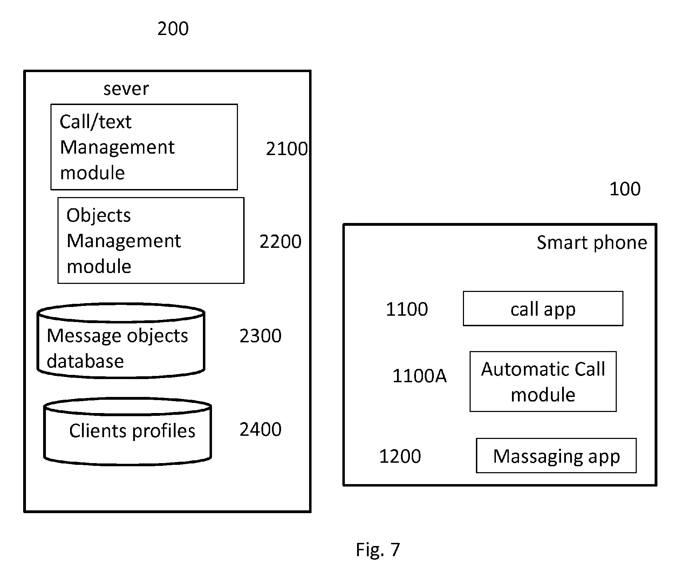

**Figure** 7 is a block diagram of the system components and modules, according to some embodiments of the invention. The present invention system include a smart phone 100 having call application 1100, to enable smart answering to phone call with predefined message, automatic call application 1100 A to enable automatic answering to call by identifying call ID, and messaging application 1200 for sending content items such as images, video or an multimedia item to be view only when approved by the message originator. A server 200, comprising a call management 2100 module for supporting the call application 1100, and Objects Management module 2200 for supporting the control of the content items access management.

According to some embodiments of the invention, the recipient of the call may updated the call application, or the call application identifies that the recipient is not alone (when entering the car or entering a conference room), in such case the call application sends indication to all potential callers, smart phone , that the user recipient is currently not alone, such that, when the user open the recipient number in the contact list, his number may appear in different color or pattern.

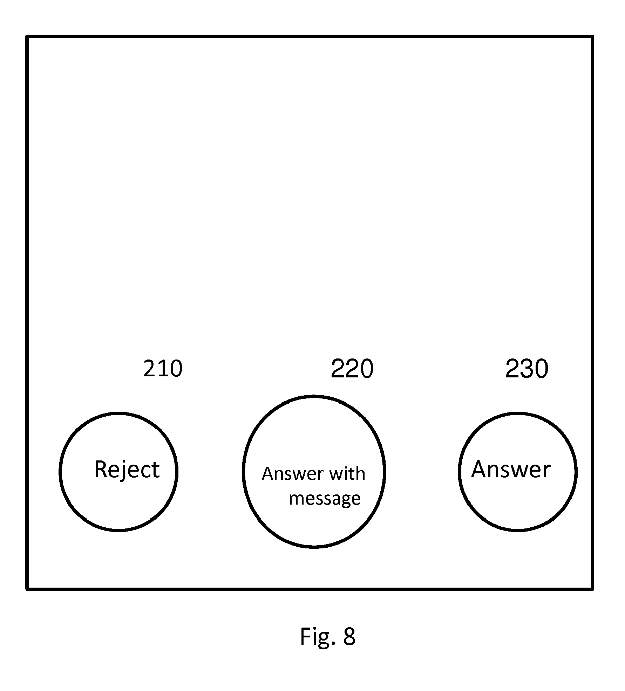

**Figure** 8 is an illustration of the mobile phone screen interface of the call application, according to some embodiments of the invention. When receiving a call, the recipient has three option: rejecting the cal 210, accepting the call in normal mode, or accepting call in special mode, by sending predefined message before the call is imitated.

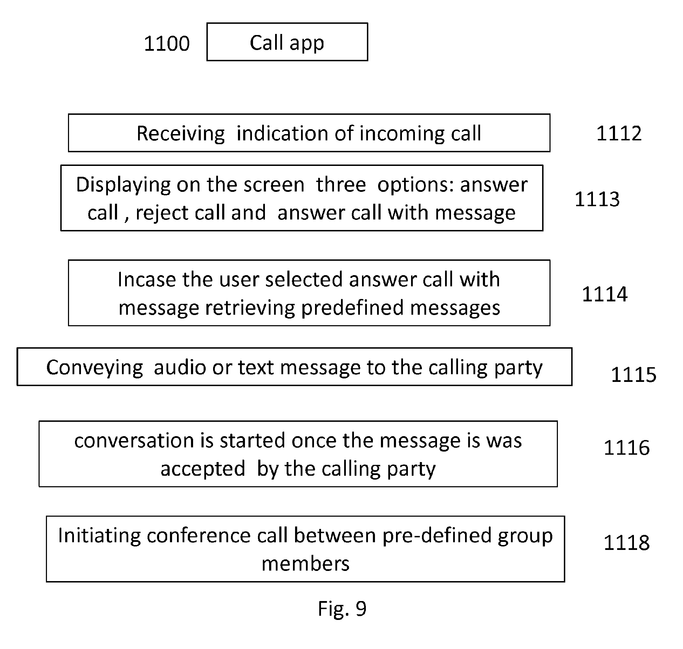

**Figure** 9 is a flowchart illustrating the call module activities, according to some embodiments of the invention. The call module implements the following steps: receiving indication of incoming call 1112, displaying on the screen three options: answer call , reject call and answer call with message 1113, incase the user selected answer call with message retrieving predefined messages 114and conveying text or voice message to the calling party 1115, the conversation is started once the message is was accepted by the calling party 1116. Optionally the calling user is requested to indicate the message was read or heard, by clicking on designated button.

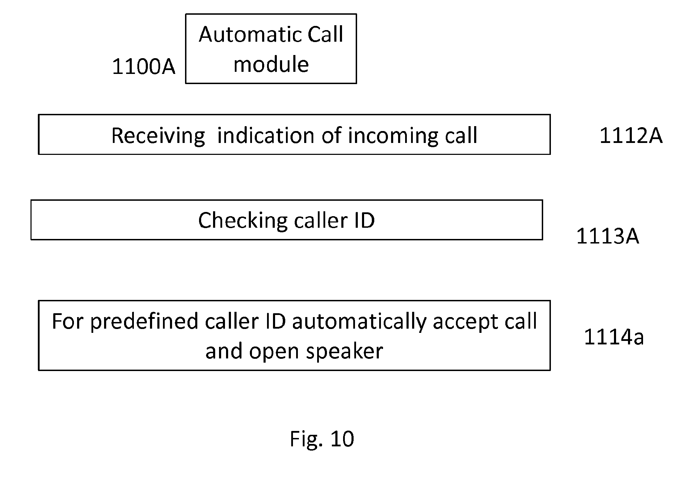

**Figure** 10 is a flowchart illustrating the Automatic call module activities, according to some embodiments of the invention: The automatic call module implements the following steps: Receiving indication of incoming call 1112A, Checking caller ID 1113A, for predefined caller ID automatically accept call and open speaker

**Figure 11** is a flowchart illustrating the call management module activities, according to some embodiments of the invention. The call management module implements the following steps: Identifying when a called party selected the answer with message option 2110, retrieving predefined messages associated with the called parry 2112, once conveying the predefined messages associated with the called party to the calling party 2214, Receiving notification from the calling party the message was accepted 2216 and Approving call initiation one receiving the message indication 2118.

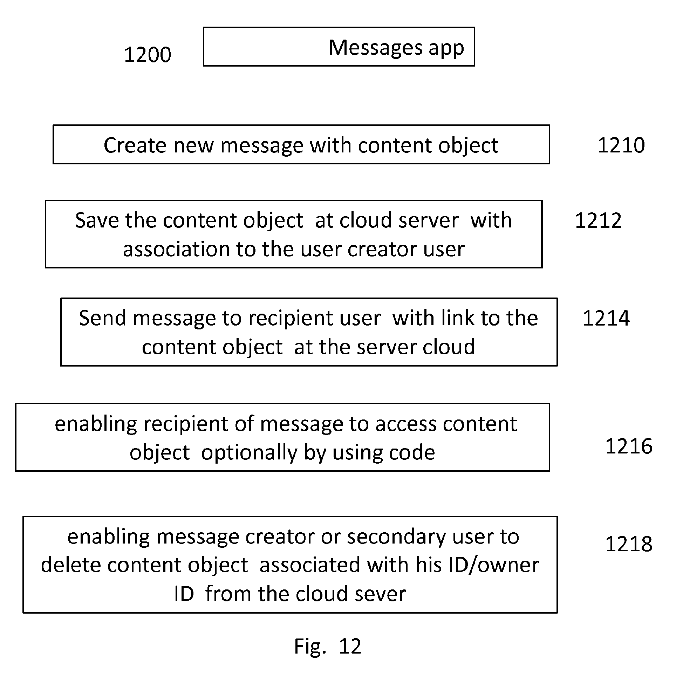

**Figure** 12 is a flowchart illustrating the message app activities, according to some embodiments of the invention. The message app module implements the following steps: create new message with content object 1210, save the content object at a cloud server with association to the user creator ID and message ID 1112, Send message to recipient user with link to the content object at the server cloud 1214, enabling recipient of message to access content object 1216, optionally by using code 1218.

According to another option of the present invention, the original creator of the message, may receive an indication in case the message was forwarded to another user. He may further receive an indication to the number of people the message, was forwarded.

The messaging application may include security modules preventing the user viewing the messages from making screen shots or capturing the image by external cameras.

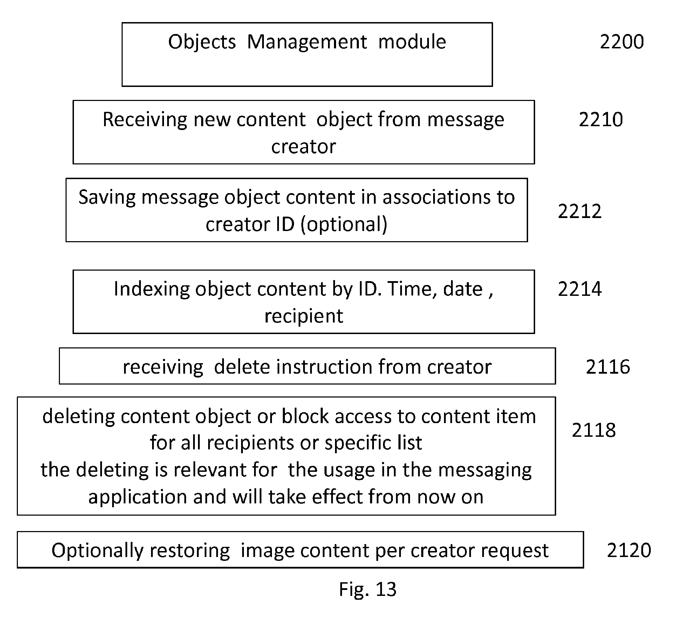

**Figure 13** is a flowchart illustrating the object management module activities, according to some embodiments of the invention. The object management module 2200 implements the following steps: Receiving new content object from message creator 2210, Saving object content in associations to creator ID 2220, Indexing object content by ID. Time, date , recipient 2230, receiving delete instruction form creator 2240, deleting content object or block access to content item for all recipients or specific list 2250 , the deleting is relevant for the usage in the messaging application and will take effect from now on.

Optionally enabling restoring image content per creator request 145.

According to some embodiments of the present invention, the call application may enable to create group of users and enable, each user to initiate a conference call between all group members by a single operation(step 1118 Fig 9.). Each user may control speaker of his device and of the group members devices.

According to some embodiments of the present invention, the system may enable, to create group of members and support collaborative games between the group members.

According to some embodiments of the present invention, the call application may support, leaving message to un-answered calls, recorded in the application and transformed to text messages.

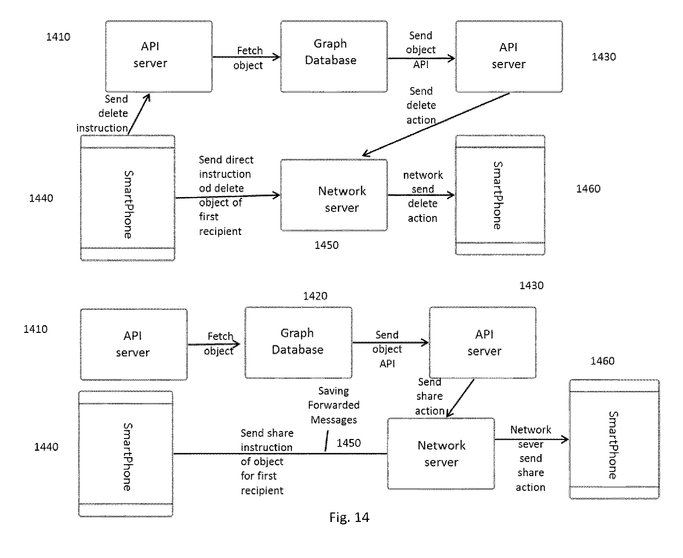

**Figure** 14 is a block diagram illustrating the object management module flow for sharing and deleting actions, according to some embodiments of the invention. A share or delete instruction for an object is initiated by user at the mobile phone (e.g. smartphone) 1410 messaging application, the delete or share request is processed at the API server for retrieving object distribution list from the graph database 1420, which is sent to the API 1430. The API sever 1430 transfers delete or share request with distribution list to network sever 1450 for processing the request and sending delete or share action for all mobile 1460 messaging application appearing at the distribution list. Optionally the requesting smart phone may send direct delete action for the first recipient of the message through the network sever 1450.

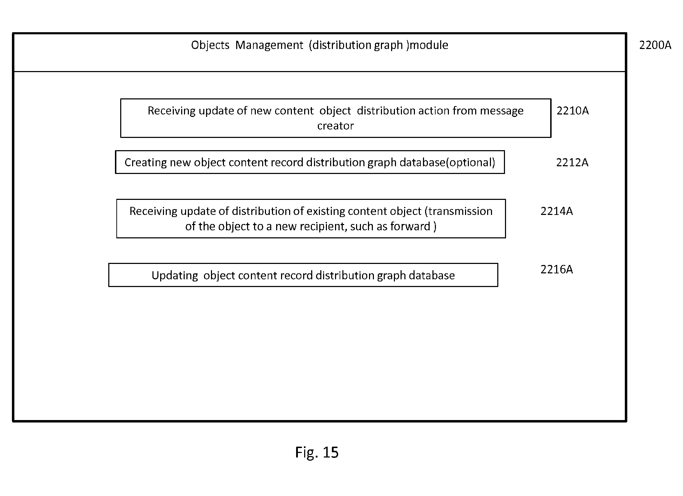

**Figure** 15 is a flowchart illustrating the object sharing module activities, according to some embodiments of the invention. The object sharing module include at least one of the following steps:
- Receiving update of new content object distribution action from message creator (step 2210A);
- Creating new object content record at the distribution graph database (step 2212A);
- Receiving update of distribution of existing content object (transmission of the object to a new recipient, such as forward ) (step 2214A);
- Updating object content record distribution graph database (step 2216A);

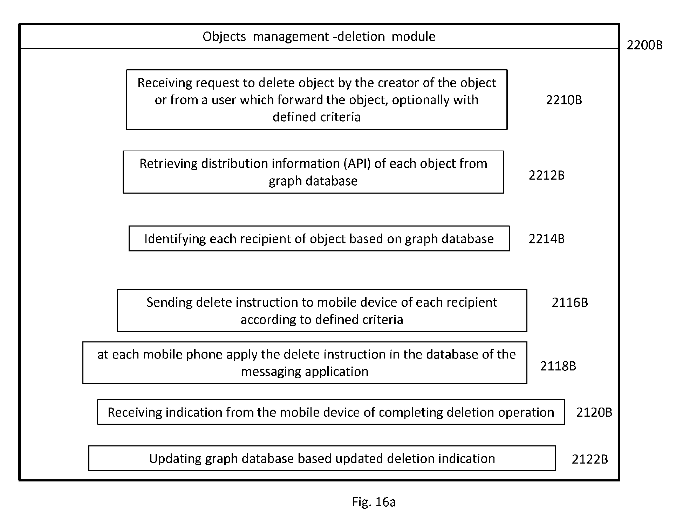

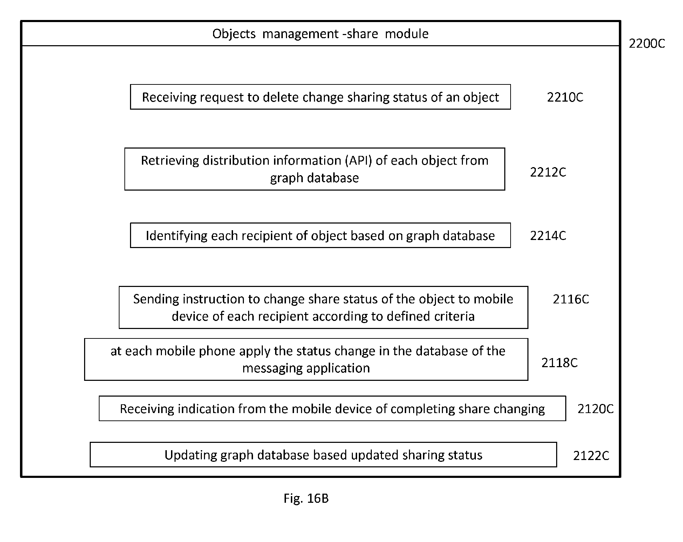

**Figure** 16 is a flowchart illustrating the object deleting module activities, according to some embodiments of the invention. The object deleting module include at least one of the following steps:
- Receiving request to delete object by the creator of the object; (step 2210B)
- Retrieving distribution information (API) of each object from graph database(step 2212B);
- Identifying each recipient of object based on graph database (step 2214B);
- Sending delete instruction to mobile device of each recipient according to defined criteria, the criteria may include defining level the tree, all sons of one user node, specific user , time based or location based condition. (step 2216B);
- at each mobile phone apply the delete instruction in the database of the messaging application (Step 2118B);
- receiving indication from the mobile device of completing deletion operation(step 2120B);
- Updating graph database based updated deletion indication (step 2122B)

**Figure** 16B is a flowchart illustrating the object sharing module activities, according to some embodiments of the invention;

The method of enabling the share option of the object for the users which received the object can be implemented as following:
receiving request to enable share of an object by the first user; (step 2110 C)
query the graphical database for retrieving the distribution list of said content object (step 2112 C, 2114C));
sending share enable instruction to at least mobile appearing at the distribution list (step 2116 C);
changing share status object at each mobile phone such as the user of said mobile phone can be share the object with other users(step 2118C)
Receiving indication from the mobile device of completing share changing; (step 2120 C)
Updating graph database based updated sharing status; (step 2122 C) According to embodiments of the present invention the once the status of objet was changed, the share icon graphic properties are changed to indicate the object can be shared at each respective mobile phone;

According to embodiments of the present invention, it is possible to query the graph database for each object to calculate number of users which received the respective object for marketing purposes.
According to embodiments of the present invention, it is possible to query the graph database to identify a user which distributed the object , more than predefined threshold or more than other users.
According to embodiments of the present invention, it is possible to enable each user which received the object to grade the object (e.g. Like indication) and calculating accumulated grade of at least one object for all users.

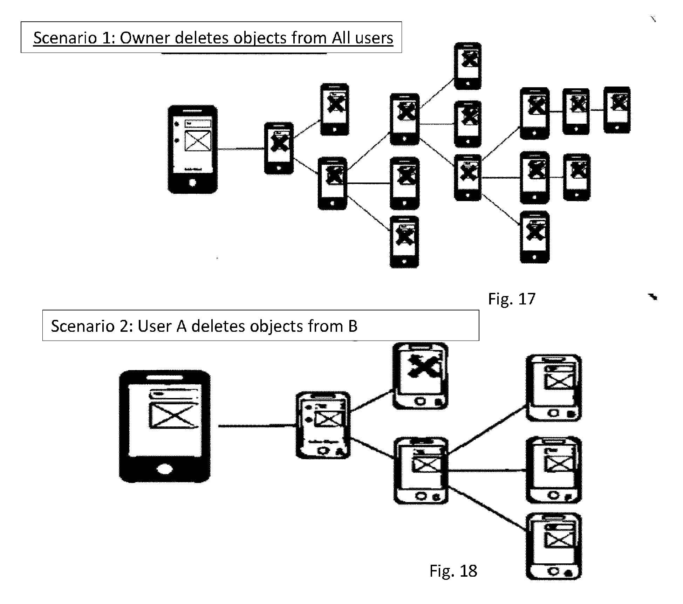

**Figure** 17 is an illustrating the deleting all objects along distribution list, according to some embodiments of the invention. According to this embodiment the user request to delete all users which received a specific object.

**Figure** 18 is an illustrating the deleting a single object along distribution list, according to some embodiments of the invention. According to this embodiment the user requests to delete object of single recipient from the distribution list of users which received a specific object.

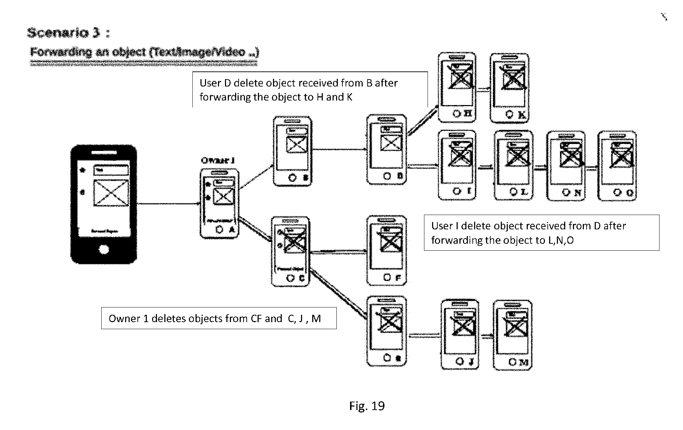

**Figure** 19 is an illustrating the deleting groups of object along distribution list, according to some embodiments of the invention.

According to this embodiment the user request to delete a groups of users from the distribution list of users which received a specific object. The groups can be defined according to the tree level or all user nodes in the tree that have common ancestor which forwarded the object.

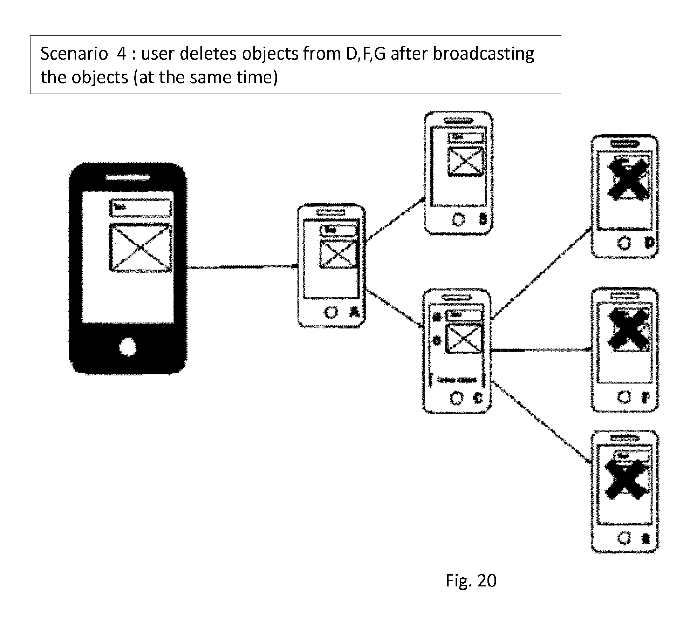

**Figure** 20 is an illustrating the deleting objects along distribution list at the same tree level or based on distribution time, according to some embodiments of the invention.

According to some embodiments of the present invention the distribution list at graph data base can be used for marketing of viral campaigns, providing the market manager with amount of user which received the relevant object, e.g. clip of the viral campaign. Optionally the distribution graph may enable to identify users which have distributed the object to large amount of other users, such information may be use full for future campaigns.

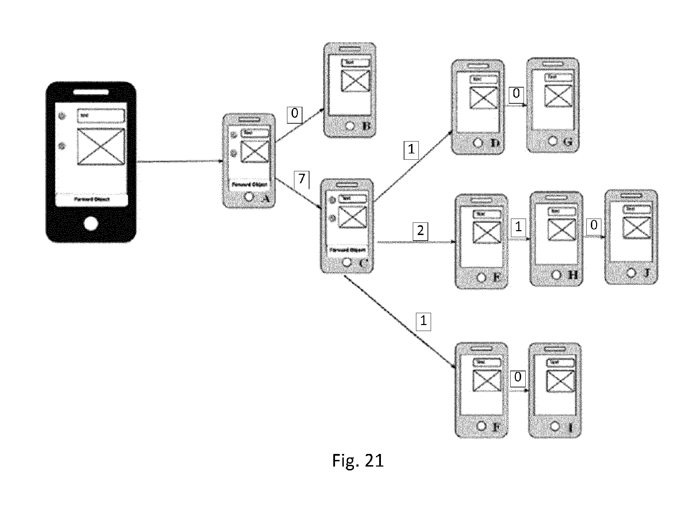

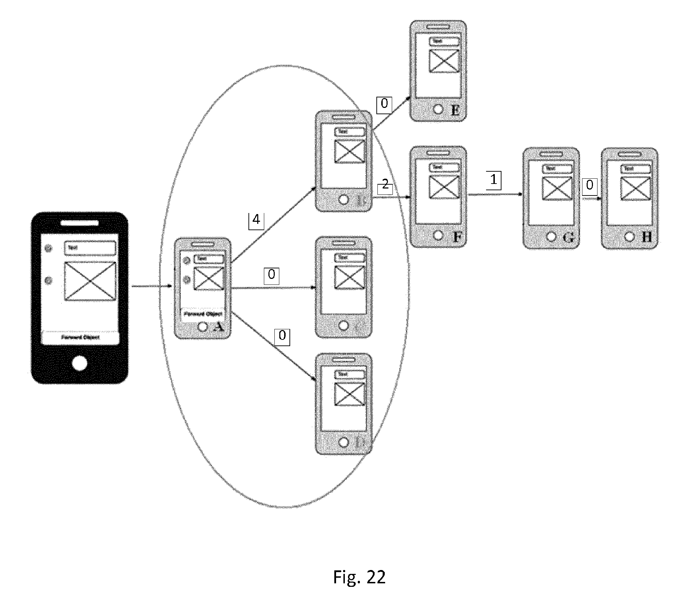

**Figures** 21 and 22 illustrates the distribution of messages in tree level structure , according to some embodiments of the invention. The illustration show an example of message distribution between smart phone in tree level structure, at each node tree are marked the number of message distributed from each node.

The system of the present invention may include, according to certain embodiments of the invention, machine readable memory containing or otherwise storing a program of instructions which, when executed by the machine, implements some or all of the apparatus, methods, features and functionalities of the invention shown and described herein. Alternatively or in addition, the apparatus of the present invention may include, according to certain embodiments of the invention, a program as above which may be written in any conventional programming language, and optionally a machine for executing the program such as but not limited to a general purpose computer which may optionally be configured or activated in accordance with the teachings of the present invention. Any of the teachings incorporated herein may wherever suitable operate on signals representative of physical objects or substances.

Unless specifically stated otherwise, as apparent from the following discussions, it is appreciated that throughout the specification discussions, utilizing terms such as, "processing", "computing", "estimating", "selecting", "ranking", "grading", "calculating", "determining", "generating", "reassessing", "classifying", "generating", "producing", "stereo-matching", "registering", "detecting", "associating", "superimposing", "obtaining" or the like, refer to the action and/or processes of a computer or computing system, or processor or similar electronic computing device, that manipulate and/or transform data represented as physical, such as electronic, quantities within the computing system's registers and/or memories, into other data similarly represented as physical quantities within the computing system's memories, registers or other such information storage, transmission or display devices. The term "computer" should be broadly construed to cover any kind of electronic device with data processing capabilities, including, by way of non-limiting example, personal computers, servers, computing system, communication devices, processors (e.g. digital signal processor (DSP), microcontrollers, field programmable gate array (FPGA), application specific integrated circuit (ASIC), etc.) and other electronic computing devices.

The present invention may be described, merely for clarity, in terms of terminology specific to particular programming languages, operating systems, browsers, system versions, individual products, and the like. It will be appreciated that this terminology is intended to convey general principles of operation clearly and briefly, by way of example, and is not intended to limit the scope of the invention to any particular programming language, operating system, browser, system version, or individual product.

It is appreciated that software components of the present invention including programs and data may, if desired, be implemented in ROM (read only memory) form including CD-ROMs, EPROMs and EEPROMs, or may be stored in any other suitable typically non-transitory computer-readable medium such as but not limited to disks of various kinds, cards of various kinds and RAMs. Components described herein as software may, alternatively, be implemented wholly or partly in hardware, if desired, using conventional techniques. Conversely, components described herein as hardware may, alternatively, be implemented wholly or partly in software, if desired, using conventional techniques.

Included in the scope of the present invention, inter alia, are electromagnetic signals carrying computer-readable instructions for performing any or all of the steps of any of the methods shown and described herein, in any suitable order; machine-readable instructions for performing any or all of the steps of any of the methods shown and described herein, in any suitable order; program storage devices readable by machine, tangibly embodying a program of instructions executable by the machine to perform any or all of the steps of any of the methods shown and described herein, in any suitable order; a computer program product comprising a computer useable medium having computer readable program code, such as executable code, having embodied therein, and/or including computer readable program code for performing, any or all of the steps of any of the methods shown and described herein, in any suitable order; any technical effects brought about by any or all of the steps of any of the methods shown and described herein, when performed in any suitable order; any suitable apparatus or device or combination of such, programmed to perform, alone or in combination, any or all of the steps of any of the methods shown and described herein, in any suitable order; electronic devices each including a processor and a cooperating input device and/or output device and operative to perform in software any steps shown and described herein; information storage devices or physical records, such as disks or hard drives, causing a computer or other device to be configured so as to carry out any or all of the steps of any of the methods shown and described herein, in any suitable order; a program pre-stored e.g. in memory or on an information network such as the Internet, before or after being downloaded, which embodies any or all of the steps of any of the methods shown and described herein, in any suitable order, and the method of uploading or downloading such, and a system including server/s and/or client/s for using such; and hardware which performs any or all of the steps of any of the methods shown and described herein, in any suitable order, either alone or in conjunction with software. Any computer-readable or machine-readable media described herein is intended to include non-transitory computer- or machine-readable media.

Any computations or other forms of analysis described herein may be performed by a suitable computerized method. Any step described herein may be computer-implemented. The invention shown and described herein may include (a) using a computerized method to identify a solution to any of the problems or for any of the objectives described herein, the solution optionally include at least one of a decision, an action, a product, a service or any other information described herein that impacts, in a positive manner, a problem or objectives described herein; and (b) outputting the solution.

The scope of the present invention is not limited to structures and functions specifically described herein and is also intended to include devices which have the capacity to yield a structure, or perform a function, described herein, such that even though users of the device may not use the capacity, they are, if they so desire, able to modify the device to obtain the structure or function.

Features of the present invention which are described in the context of separate embodiments may also be provided in combination in a single embodiment.

For example, a system embodiment is intended to include a corresponding process embodiment. Also, each system embodiment is intended to include a server-centered "view" or client centered "view", or "view" from any other node of the system, of the entire functionality of the system, computer-readable medium, apparatus, including only those functionalities performed at that server or client or node.

## Claims

1. A method for exchanging content items in computerized social network using data communication network, using mobile phones, said method comprising the steps of:
- creating new message with content object by a first user using a mobile phone;
- sending the message with the content object to at least one second user mobile phone;
- saving content object in specific location in the memory of the second user smartphone which is restricted for use only to a designated messaging application;
- creating data record of the content object including: unique ID of the object, identification of the first originator user and adding identification of the at least one second user into distribution list;
- saving said data record in graph database in a network server;
- receiving update of distribution of said object by a second user to at least one third user;
- updating distribution list in graph database with the at least third user identification;
- applying delete or share actions of objects at the mobile phones based on the distribution list of the users;
wherein creating, saving receiving and updating are performed by at least one processor.

2. The method of claim 1fuhter comprising the step of:
- receiving request to delete an object by the first user;
- query the graphical database for retrieving the distribution list of said content object;
- sending delete instruction to at least smartphone appearing at the distribution list;
- deleting at each mobile phone the respective object from memory

3. The method of claim 2 further comprising the step of:
- receiving indication from the respective mobile phone of deleting object;
- updating distribution list in the graph database based on received indications;

4. The method of claim 2 wherein the first user define partial list of mobile phones from the distribution list according to defined criteria.

5. The method of claim 2 wherein the criteria includes at least one of: level of tree, time of distribution, geographic location of distribution, specific identification of users.

6. The method of claim 1fuhter comprising the step of:
- receiving request to share an object by the first user;
- query the graphical database for retrieving the distribution list of said content object;
- sending share instruction to at least mobile appearing at the distribution list;
- changing share status object at each respective mobile phone enabling the user to share the object;

7. The method of claim 6 1fuhter comprising the step of changing share icon graphic properties to indicate the object can be shared at each respective mobile phone;

8. The method of claim 1 further comprising the step of querying the graph database for each object to calculate number is users which received the respective object.

9. The method of claim 1 further comprising the step of querying the graph database to identify user which distributed the object , more than predefined threshold or more than other users.

10. The method of claim 1 further comprising the steps of enabling each user which received the object to grade the object and calculating accumulated grade of at least one object for all users.

11. A system for exchanging content items in computerized social network using data communication network, said system comprised of:
- a personal computer communication device comprising a messaging application for creating new message with content object by a first user to a second user, sending the message with the content object to at least one second user, saving content object is specific location in the memory of the second user personal computer communication device, said memory which is restricted for use only to the messaging application;
- an API sever for creating data record of the content object including: unique ID of the object, identification of the first originator user, adding identification of the at least one second user into distribution list, saving said data record in graph database in a network server, receiving update of distribution of said object by a second user to at least one third user and updating distribution list in graph database with the at least third user identification;
- a network server sever for managing delete and share action per users request, based on the distribution lists of the objects

12. The system of 14 claim 1 wherein the message application further apply the following :
- receiving request to delete an object by the first user;
- query the graphical database for retrieving the distribution list of said content object;
- sending delete instruction to at least smartphone appearing at the distribution list;
- receiving indication from the respective smart phone of deleting object; and
- updating distribution list in the graph database based on received indications;

13. The system of claim 14 wherein the first user define partial list of mobile phone from the distribution list according to defined criteria.

14. The system of claim 14 wherein the criteria may include at least one of level of tree, time of distribution, location of distribution, specific identification of users.

15. The system of claim 14 wherein the messaging application further applying the following :
- receiving request to share an object by the first user;
- query the graphical database for retrieving the distribution list of said content object;
- sending share instruction to at least mobile appearing at the distribution list; and
- changing share status object at each respective mobile phone enabling the user to share the object;
